(19) Europäisches Patentamt
European Patent Office
Office européen des brevets

(11) Veröffentlichungsnummer: **0 001 269**
**A2**

(12) # EUROPÄISCHE PATENTANMELDUNG

(21) Anmeldenummer: **78100906.3**

(22) Anmeldetag: **15.09.78**

(51) Int. Cl.²: **G 05 B 19/36**
**B 23 Q 35/00**

(30) Priorität: 23.09.77 DE 2742933

(43) Veröffentlichungstag der Anmeldung:
04.04.79 Patentblatt 79/7

(84) Benannte Vertragsstaaten:
CH FR GB NL SE

(71) Anmelder: **Heckler & Koch GmbH**
**Pfäfflinstrasse Postfach 1329**
**D-7238 Oberndorf(DE)**

(72) Erfinder: **Strobel, Herbert, Dipl.-Ing., Dr- Ing.**
**Dornhanerstrasse 6**
**D-7238 Oberndorf(DE)**

(74) Vertreter: **Kohler, Rudolf, Dipl.-Phys. et al,**
**Kohler-Schwindling-Späth-Rüdel Hohentwielstrasse 41**
**D-7000 Stuttgart 1(DE)**

(54) **Verfahren zur Bahnsteuerung einer Werkzeugmaschine.**

(57) Es handelt sich um ein Verfahren zur Bahnsteuerung einer Werkzeugmaschine, bei der entweder das Werkzeug oder das Werkstück zur Erzeugung einer vorgegebenen Werkstückkontur entlang einer der Kontur entsprechenden Kurve bewegt werden. Der Konturverlauf ist durch eine Vielzahl von Einzelpunkten angenähert und es wird zwischen den Punkten interpoliert. Nach jedem Interpolationsabschnitt erfolgen eine Sollwertabtastung, ein Sollwert-Iswert- Vergleich und eine entsprechende Korrekturwerteingabe für das Stellorgan. Zur Verminderung des Aufwands bei guter Genauigkeit wird die Sollwertabtastung nach Durchlauf einer vorgegebenen Wegstrecke und nicht mehr nach einem vorgegebenen Zeitabstand durchgeführt.

EP 0 001 269 A2

Anmelderin:        Stuttgart, den 24. Aug.1978
Heckler & Koch GmbH   P 3420 X/kg
Oberndorf/Neckar


Vertreter:

Kohler-Schwindling-Späth
Patentanwälte
Hohentwielstraße 41
7000 Stuttgart 1

## Verfahren zur Bahnsteuerung einer Werkzeugmaschine

Die Erfindung betrifft ein Verfahren zur Bahnsteuerung einer Werkzeugmaschine, deren Werkzeug und/oder Werkstück zur Erzeugung einer vorgegebenen Kontur entlang einer Kurve bewegt werden, wobei die Kurve durch eine Vielzahl von Punkten angenähert ist, zwischen denen die Bewegungen interpolatorgesteuert ablaufen und vor und nach jedem einzelnen Interpolationsabschnitt eine Sollwertabtastung erfolgt, an die ein Soll-Ist-Wertvergleich mit entsprechender Korrekturwerteingabe an ein Stellorgan anschließt.

./.

Werkzeugmaschinen werden in zunehmendem Maße automatisiert, teils durch einfache mechanische Verfahren, wie Kopieren anhand von Schablonen oder durch Abtasten von Zeichenvorlagen, oder elektronisch durch numerische Steuerungen. Sollen dabei beliebige Konturen an einem Werkstück bearbeitet bzw. hergestellt werden, muß das Werkzeug oder das Werkstück entlang einer vorgegebenen Kurve während der Bearbeitung bewegt werden. Da die abzufahrenden Kurven einen beliebigen Verlauf haben können wird die Kurve durch eine Vielzahl von Punkten bzw. zwischen den Punkten befindlichen Streckenabschnitten angenähert. Die Kurve zwischen den Punkten wird durch einen Interpolator gesteuert. Dieser Interpolator erfüllt die Aufgabe, die Kurve in Wegabschnitte endlicher Länge zu zerlegen. Der Interpolator muß also aus dem analytisch gegebenen Verlauf der Kurve oder Funktion möglichst exakte geometrische Informationen gewinnen und diese synchron zum Bearbeitungsvorgang der Werkzeugmaschine zur Fortführung der Bearbeitung zuführen. Wichtig ist also nicht nur, daß die richtigen Werte mit ausreichender Genauigkeit geliefert werden, sondern daß sie auch zur richtigen Zeit dem Stellorgan der zugeordneten Koordinatenachse zugeführt werden. Dabei ist das jeder Koordinatenachse zugeordnete System als Regelkreis anzusehen, dem die vom Interpolator ermittelten Sollwerte als Führungsgröße zugeführt werden. In diesem Regelkreis wird dann jeweils ein Soll-Ist-Wertvergleich durchgeführt und danach das Stellorgan mit einer Korrekturgröße beaufschlagt. Dem die Position des Werkzeuges oder Werkstückes festlegenden Lageregelkreis werden keine stetigen Zeitfunktionen sondern

./.

im allgemeinen als numerische Werte vorliegende "Treppen-kurven" eingegeben. Diese numerische Festlegung der Funktion führt nicht nur zu einer Quantisierung des Kurvenverlaufes sondern infolge des zeitlichen Ablaufes des gesamten Vorganges auch zu einer zeitlichen Quantisierung: Die Anordnung arbeitet also taktweise. Der Interpolator erzeugt aus den eingegebenen Daten des Kurvenverlaufes numerische Werte der Führungsgrößen des jeweiligen Lageregelkreises. Für jede Koordinatenachse ist ein eigener Lageregelkreis vorgesehen; die Lageregelkreise beeinflussen sich gegenseitig nicht. Das Anlaufen einer vorgegebenen Sollposition erfolgt für jede Koordinatenachse unabhängig von allen übrigen Koordinatenachsen. Damit die Resultierende dieser Steuer-bewegungen eine vorgegebene Kurve oder Bahn einhält ist es erforderlich, daß die Verstellbewegungen in Richtung der einzelnen Koordinatenachsen sowohl eine Weg- (Ampli-tuden-) als auch eine Zeitbedingung einhalten. Da derartige Regelkreise stets Lageregelabweichungen zulassen, ergibt sich ein sogen. Schleppabstand, nämlich eine Differenz zwischen vorgegebenem Sollpunkt und augenblicklicher Ist-Position. Dieser Abstand muß stets kleiner sein als die zulässige Toleranz der Abweichung von der Sollkurve.

Da bei den üblichen Regelverfahren der Bahnsteuerung die Einstellungen in Richtung der einzelnen Koordinatenachsen voneinander unabhängig sind, muß dann, wenn die Stellbewegung in Richtung einer Achse einen vorgegebenen Schleppabstand übersteigt, die Geschwindigkeit der Stellbewegung in Richtung dieser Achse erhöht werden. Dies hat

./.

- 4 -

zur Folge, daß das System zur Unstetigkeit, also zu Schwingungen, neigt.

Es ist bereits untersucht worden ("Bahnsteuerung", Forschungsbericht KFK-PDV 72), den Lageregler in einem Steuerungsrechner durch entsprechende Programmierung nachzubilden. Ein solcher rechnerinterner Interpolator gibt nicht Lage-, sondern Geschwindigkeitsführungsgrößen an. Die Position wird durch Integration der Geschwindigkeitsabschnitte festgestellt. Bei dieser Anordnung wird die Geschwindigkeit für jede Koordinatenachse in vorgegebenen Kontrollpunkten vorgeschrieben, die durch ein Zeitraster festgelegt sind. Dabei ist der Zeittakt des Zeitrasters so gewählt, daß der maximal zulässige Schleppabstand nicht überschritten wird. Die jeweils erforderliche Korrektur muß zwischen zwei Abtastpunkten errechnet werden können, was hohe Anforderungen an die Rechengeschwindigkeit stellt. Da hohe Genauigkeit oder große Bahngeschwindigkeiten auch hohe Abtastraten und große Rechnerleistungen erfordern erscheint es bei dieser bekannten Methode notwendig zu sein, die Lage der Abtastpunkte einschließlich der dort vorzugebenden Bahngeschwindigkeit bzw. der Änderungen des Bahngeschwindigkeitsvektors in der Beschleunigungs- und der Verzögerungsphase bereits vor dem Lauf der Werkzeugmaschine festzulegen. Dies scheitert aber daran, daß bei Einsatz eines zeitlichen Rasters die Abtastpunkte nicht vorausberechnet werden können, weil die Bewegung der Stellglieder und der damit verbundenen Maschinenteile nicht vorherbestimmbar ist aufgrund von mechanischen Eigenschaften der Maschine, beispielsweise aufgrund von Schwergängigkeiten, nichtlinearen Änderungen der Reibung bei Geschwindigkeitsänderungen und dgl..

./.

- 5 -

Aufgabe der vorliegenden Erfindung ist es, ein Verfahren der eingangs genannten Art so zu verbessern, daß eine Durchführung mit weniger Aufwand und dennoch ausreichender Genauigkeit möglich ist.

Gelöst wird diese Aufgabe bei einem Verfahren der eingangs genannten Art erfindungsgemäß dadurch, daß die Sollwertabtastung nachDurchlaufen eines vorgegebenen Weges, insbesondere nach Eingang einer vorgegebenen Summe von Wegimpulsen, erfolgt. Der Abtastzeitpunkt wird also nicht zeitlich sondern geometrisch festgelegt. Dabei wird der Abtastzeitpunkt nicht nur in Abhängigkeit des Bahnverlaufes sondern vielmehr in Abhängigkeit der tatsächlichen Maschinenbewegung ermittelt. Von Vorteil ist bei dem erfindungsgemäßen Verfahren, daß eine danach arbeitende Maschine nicht zu Schwingungen neigt wie bei dem zuvor besprochenen bekannten Verfahren, weil nämlich Geschwindigkeitsüberhöhungen zwecks Einhaltung der Zeitbedingungen entfallen können. Die Korrekturen sind Richtungskorrekturen des Bahngeschwindigkeitsvektors, wobei die resultierende Geschwindigkeit konstant bleibt, abgesehen von der Beschleunigungs- bzw. Verzögerungsphase. Die Anteile für die einzelnen Koordinatenachsen, die zusammen den Bahnvektor bilden, werden in bekannter Weise durch Komponentenzerlegung ermittelt. Durch die Einteilung der Bahn in Wegabschnitte ist es möglich, die Abtastpunkte einschließlich der den jeweiligen Abtastpunkten zugeordneten Bahndaten im voraus zu berechnen, also nicht während der Arbeitszeit der Maschine, so daß der die Maschine steuernde Rechner während der Bearbeitungszeit fast ausschließlich

./.

für die Lageregelung benutzt werden kann. Dadurch läßt sich erreichen, daß die Anforderungen an den Rechner vermindert bzw. die mögliche Arbeitsgeschwindigkeit der Anlage erhöht werden kann.

Es ist zwar möglich, die Wegstrecken bzw. Wegimpulse jeder Koordinatenachse für sich oder, bei Sonderfällen, nur eine einzige Koordinatenachse auszuwerten. Bei bevorzugten Ausführungsformen der Erfindung werden dagegen die Wegstrecken bzw. Wegimpulse aller Bewegungskoordinaten aufsummiert. Dadurch wird der Effekt einer Kopplung der Bewegungsachsen erzielt. Dies bedeutet, daß ein zunehmender Schleppabstand in einer Achse ein Abbremsen der übrigen Achsen bewirkt. Dadurch wird nicht nur die Stabilität des Systems erhöht sondern es wird auch die Nachfahrgenauigkeit der vorgeschriebenen Bahn verbessert. Die Stellglieder der einzelnen Achsen müssen dann nur noch die Weg- oder Amplitudenbedingung genau genug erfüllen und es braucht nicht auf die Einhaltung von Zeitbedingungen geachtet werden, was erhebliche Vorteile bietet. Dabei werden die Anteile für die einzelnen Achsen, die den Bahnvektor ergeben, durch Komponentenzerlegung in bekannter Weise ermittelt. Die resultierende Fahrgeschwindigkeit entlang der Bahn bleibt im wesentlichen konstant, wie bereits erwähnt.

Bei einer anderen Durchführungsform des erfindungsgemäßen Verfahrens werden die Wegstrecken bzw. Wegimpulse unabhängig von der Bewegungsrichtung aufsummiert. Dies führt dazu, daß dann, wenn Schwingungen

./.

auftreten, trotzdem nach Zurücklegung der vorgegebenen Wegstrecke ein Abtastvorgang erfolgt. Es kann hierbei auch ein Signal abgeleitet werden, das Vorgänge zur Dämpfung oder sonstigen Behebung der Schwingung einleitet.

Die Abtasthäufigkeit erreicht, bezogen auf die durchlaufene Bahn, dann ein Maximum, wenn alle Bewegungsachsen dieselbe Anzahl von Wegimpulsen liefern. Dagegen nimmt die Abtasthäufigkeit ab, wenn der Bahnvektor in mindestens einer der Koordinatenachsen eine Null-Komponente aufweist. Diese Eigenart ist aber nicht von Nachteil, da bei Bewegungen in Richtung einer Koordinatenachse, bei der die Komponenten in den beiden anderen Achsen eines (kartesischen) Koordinatensystemes Null sind, oder bei Bewegung in einer durch zwei Achsen gegebenen Ebene, bei der die Bewegungskomponente in Richtung der dritten Achse Null ist, die Anforderungen an die Steuerung ohnedies geringer sind. Es handelt sich dann in diesem Fall streng genommen nicht mehr um eine Bahnsteuerung sondern nur noch um eine Strecken- bzw. Punktsteuerung, die sehr viel einfacher zu beherrschen sind und die keine so hohen Anforderungen stellen, so daß auch eine weniger häufige Abtastung zu einem geringen Schleppabstand, also zu einer hohen Nachführgenauigkeit führt.

Zur Erläuterung dieser Eigenschaften werden anschließend drei Beispiele besprochen, bei denen jeweils vorausgesetzt ist, daß ein Abtastvorgang nach Eingang von zwanzig Wegimpulsen ausgelöst wird. Dabei wird gemäß den obigen Ausführungen so vorgegangen, daß die Wegimpulse aller Bewegungskoordinaten ohne Rücksicht auf die Bewegungsrichtung

./.

aufsummiert werden. Verläuft die zu steuernde Bahn in Richtung einer Koordinatenachse, sind also die Bewegungskomponenten der anderen Koordinatenachsen Null, so erfolgt eine Abtastung nach Zurücklegen eines Weges von jeweils zwanzig Wegeinheiten. Liegt dagegen die Bahn in einer durch zwei Koordinatenachsen definierten Ebene so beträgt der zurückgelegte Weg zwischen zwei Abtastungen minimal etwa vierzehn Wegeinheiten und maximal wiederum zwanzig Wegeinheiten (45° bzw. 0° oder 90° als Winkel zwischen Bahn und Achse). Im dritten zu betrachtenden Fall verläuft die Bahn wieder in Richtung einer der Achsen, wobei jedoch die Maschine mit einer Amplitude von fünf Wegeinheiten schwingt. Jeweils nach Eingang von zwanzig Wegimpulsen, also einem zurückgelegten Weg von zwanzig Wegeinheiten, ist die Ausgangsposition wieder erreicht und es wird dennoch eine Abtastung vorgenommen.

Patentansprüche

1. Verfahren zur Bahnsteuerung einer Werkzeugmaschine, deren Werkzeug und/oder Werkstück zur Erzeugung einer vorgegebenen Kontur entlang einer Kurve bewegt wird, wobei die Kurve durch eine Vielzahl von Punkten angenähert ist, zwischen denen die Bewegungen interpolatorgesteuert ablaufen und vor und nach jedem einzelnen Interpolationsabschnitt eine Sollwertabtastung erfolgt, an die ein Soll-Ist-Wertvergleich mit entsprechender Korrekturwerteingabe an ein Stellorgan anschließt, dadurch gekennzeichnet, daß die Sollwertabtastung nach Durchlaufen eines vorgegebenen Weges, insbesondere nach Eingang einer vorgegebenen Summe von Wegimpulsen, erfolgt.

2. Verfahren nach Anspruch 1, dadurch gekennzeichnet, daß die Wegstrecke bzw. die Wegimpulse aller Bewegungskoordinaten aufsummiert werden.

3. Verfahren nach Anspruch 1 oder 2, dadurch gekennzeichnet, daß die Wegstrecken bzw. Wegimpulse unabhängig von der Bewegungsrichtung aufsummiert werden.